# EUROPEAN PATENT APPLICATION

(11) **EP 1 978 718 A1**
(43) Date of publication of application: **08.10.2008**
(21) Application number: 06805140.8
(22) Date of filing: 02.11.2006
(51) Int. Cl.: H04L 29/12

(54) **METHOD AND SYSTEM FOR RECOGNIZING THE CONTROLLED UNIT BY A MAIN CONTROL UNIT**

(30) Priority: 28.12.2005 CN 200510097472
(71) Applicant: Huawei Technologies Co., Ltd., Longgang District Shenzhen 518129 (CN)
(72) Inventor: ZHOU, Jun, Shenzhen, Guangdong 518129 (CN)
(74) Representative: Thun, Clemens
(86) International application number: PCT/CN2006/002939
(87) International publication number: WO 2007/073657

(57) **Abstract**

A method and system for a main control unit (MCU) to identify controlled units is described. A reference of corresponding relationships between logical identifiers and global identifiers of the controlled units is configured. The MCU scans to acquire the global identifiers of the controlled units according to the logical identifiers thereof, builds a corresponding relation between the logical and global identifiers of the current controlled unit, and determines whether the currently built corresponding relation and the reference of corresponding relationships are consistent. If consistent, the MCU identifies the controlled unit according to the reference of corresponding relationships; otherwise, updates the reference of corresponding relationships and identifies the controlled unit by the updated reference. Through the present invention, no matter a controlled unit is changed or not, the MCU can correctly identify the controlled unit, thereby ensuring the normal realization of the communication function between the MCU and the controlled units. Meanwhile, the problem of a large input workload is solved and the routine maintenance workload for a subscriber is alleviated.

## Description

### FIELD OF THE INVENTION

The present invention relates to the technical field of wireless communication, and more particularly to a method and system for a main control unit (MCU) to identify controlled units.

### BACKGROUND

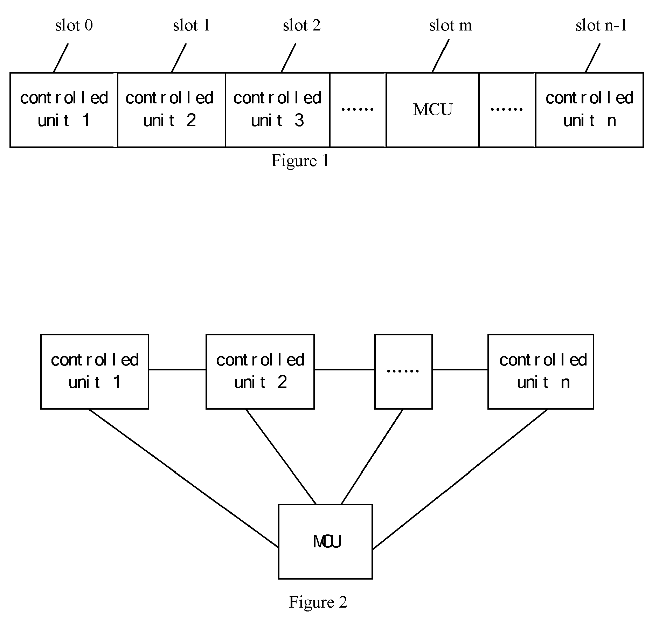

Currently, communication units are generally deployed in two ways: one is centralized deployment and the other is distributed deployment, as respectively shown in Figure 1 and Figure 2. Figure 1 is a schematic view illustrating a networking of communication units in a centralized base station in the field of wireless base stations, in which an MCU and controlled units are all in the same cabinet. Figure 2 is a schematic view illustrating a networking of communication units in a distributed base station in the field of wireless base stations, in which the MCU and the controlled units are respectively at different physical locations.

In the centralized base station in the field of wireless base stations, because the MCU and the controlled units are all located in specific slots of the same cabinet and the slots of the cabinet have fixed slot number identifiers, the communication function between the MCU and the controlled units may be realized directly through the slot number identifiers of the slots of the cabinet with no need to identify the controlled units by the MCU.

In the distributed base station in the field of wireless base stations, because the MCU and the controlled units are respectively at different physical locations, the communication function and service configuration between the MCU and the controlled units can be realized only if the MCU correctly identifies the controlled units. Therefore, how the MCU correctly identifies the controlled units is an important problem that needs to be solved in realizing the communication function between the MCU and the controlled units in the distributed deployment.

In order to solve the problem in the distributed deployment that how the MCU correctly identifies the controlled units, one technical scheme employed in the prior art is for the MCU to identify the controlled units according to logical identifiers of the controlled units. The MCU allocates the logical identifiers for the controlled units according to the number and types of the controlled units in the networking, and then identifies the controlled units according to the logical identifiers of the controlled units. Because a string of the logical identifier generally contains only 3 to 5 numbers or letters, compared with global identifiers, the logical identifiers realize the automatic allocation and maintenance more easily and facilitate software operations like sorting and searching.

However, in a second scheme, the MCU identifies the logical identifier of a controlled unit instead of the controlled unit itself. Therefore, under abnormal circumstances, for example, if the controlled unit is replaced by another communication unit or the controlled unit is dislocated, the MCU is unable to identify changes of the controlled unit through the logical identifier and even less likely to identify the corresponding controlled unit of each logical identifier. As a result, the MCU is unable to correctly identify the controlled unit after the controlled unit is changed.

### SUMMARY

Accordingly, an embodiment of the present invention is directed to a method for an MCU to identify controlled units and also directed to a system for an MCU to identify controlled units, so that the MCU is capable of correctly identifying controlled units in case the controlled units are changed.

An embodiment of the present invention further provides the following technical scheme.

A method for an MCU to identify controlled units includes configuring a reference of corresponding relationships between logical identifiers and global identifiers of the controlled units. The method further includes:

The MCU scans to acquire the global identifiers of the controlled units according to the logical identifiers of the controlled units, builds a corresponding relationship between the logical identifier and the acquired global identifier of the current controlled unit, and determines whether the built corresponding relationship is consistent with the reference of corresponding relationships. If consistent, the MCU identifies the controlled unit according to the current reference of corresponding relationships; otherwise, the MCU updates the reference of corresponding relationships and identifies the controlled unit according to the updated reference of corresponding relationships.

A system for an MCU to identify controlled units includes an MCU and controlled units.

The MCU stores a reference of corresponding relationships between logical identifiers and global identifiers of the controlled units, scans to acquire the global identifiers of the controlled units according to the logical identifiers of the controlled units, builds a corresponding relationship between the logical identifier and the acquired global identifier of the current controlled unit, and determines whether the built corresponding relationship is consistent with the reference of corresponding relationships. If consistent, the MCU directly identifies the controlled unit according to the current reference of corresponding relationships; otherwise, the MCU updates the reference of corresponding relationships and identifies the controlled unit according to the updated reference of corresponding relationships.

As seen from the above scheme, in the embodiment of the present invention, the MCU identifies controlled units according to the corresponding relationships between the logical identifiers and the global identifiers of the controlled units, and the MCU is capable of identifying changes of the controlled unit by scanning the global identifier of the current controlled unit. Therefore, when the controlled unit is unchanged, the MCU is capable of correctly identifying a controlled unit according to the reference of corresponding relationships, and when the controlled unit is changed, by updating the reference of corresponding relationships, the MCU is still capable of correctly identifying a controlled unit according to the updated reference of corresponding relationships. Therefore, no matter a controlled unit is changed or not, the MCU is capable of correctly identifying the controlled unit.

Moreover, because the MCU is still capable of correctly identifying the controlled unit when the controlled unit is changed, the communication between the MCU and the controlled units can be ensured even if the controlled unit is changed. In addition, in an embodiment of the present invention, when the controlled unit is changed, the MCU may issue an alarm and update a configured corresponding relation between the logical identifiers and the global identifiers of the controlled units into a corresponding relation between the logical identifier and the global identifier of the current controlled unit. Therefore, the subscriber may timely deal with the abnormal circumstances according to the alarm so as to prevent further expansion of an accident.

Further, in an embodiment of the prevent invention, when intending to acquire the global identifier of a specific controlled unit, the MCU only needs to scan to acquire the global identifier of the specific controlled unit through a communication link built between the MCU and the specific controlled unit without the subscriber being required to input the global identifiers of all controlled units into the MCU by the subscriber, thus greatly alleviating the input workload for the subscriber. In addition, because the subscriber may accomplish the acknowledgement of the corresponding relationships between the logical identifiers and the global identifiers of the controlled units according to the alarm information without maintaining the corresponding relationships between the logical identifiers and the global identifiers of the controlled units, the routine maintenance workload for the subscriber is greatly reduced and the probability of errors is lowered.

### BRIEF DESCRIPTION OF THE DRAWING(S)

The present invention will become more fully understood from the detailed description given herein below for illustration only, and thus are not limitative to the present invention. In the drawings:

Figure 1 is a schematic view illustrating a networking of communication units in a centralized base station in the field of wireless base stations;

Figure 2 is a schematic view illustrating a networking of communication units in a distributed base station in the field of wireless base stations;

Figure 3A is a flow chart illustrating the realization of an overall technical scheme for an MCU to identify controlled units according to an embodiment of the present invention;

Figure 3B is a schematic view illustrating a basic structure of a system for an MCU to identify controlled units according to an embodiment of the present invention; and

Figure 4 is a flow chart illustrating a method for an MCU to identify controlled units according to an embodiment of the present invention.

### DETAILED DESCRIPTION

In order to make the objectives, technical schemes, and features of the present invention comprehensible, embodiments accompanied with figures are described in detail below.

The main content of the embodiments of the present invention is that, by configuring a reference of corresponding relationships between logical identifiers and global identifiers of controlled units, an MCU is enabled to scan to acquire the global identifiers of the controlled units according to the logical identifiers of the controlled units, build a corresponding relation between the logical identifier and the global identifier of the current controlled unit, and determine whether the currently built corresponding relation and the reference of corresponding relationships are consistent. If consistent, the MCU identifies the controlled unit according to the reference of corresponding relationships; otherwise, updates the reference of corresponding relationships and then identifies the controlled unit according to the updated reference of corresponding relationships.

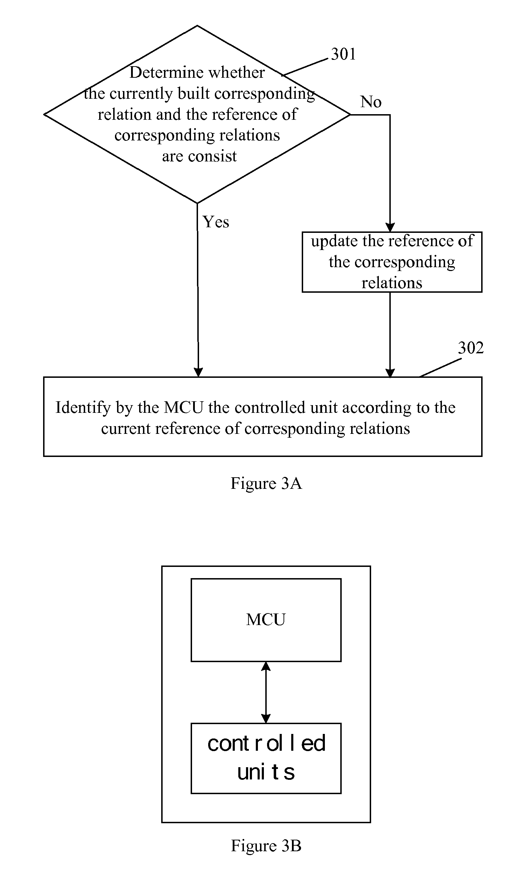

Referring to Figure 3A, a flow chart illustrating the realization of an overall technical scheme for an MCU to identify controlled units according to an embodiment of the present invention is shown. A predetermination for realizing the method is to configure a reference of corresponding relationships between logical identifiers and global identifiers of the controlled units. The implementation of the method further includes the following steps.

Step 301: The MCU scans to acquire the global identifiers of the controlled units according to the logical identifiers of the controlled units, builds a corresponding relationship between the logical identifier and the acquired global identifier of the current controlled unit, and determines whether the built corresponding relationship and the reference of corresponding relationships are consistent; if consistent, proceeds to Step 302, otherwise updates the reference of corresponding relationships and performs Step 302.

Step 302: The MCU identifies the controlled unit according to the current reference of corresponding relationships.

Figure 3B is a schematic view illustrating the structure of a system for an MCU to identify controlled units according to an embodiment of the present invention. Referring to Figure 3B, the system in the embodiment of the present invention includes an MCU and controlled units.

The MCU stores a reference of corresponding relationships between logical identifiers and global identifiers of the controlled units, scans to acquire the global identifiers of the controlled units according to the logical identifiers of the controlled units, builds a corresponding relationship between the logical identifier and the acquired global identifier of the current controlled unit, and determines whether the built corresponding relationship and the reference of corresponding relationships are consistent. If consistent, the MCU directly identifies the controlled unit according to the current reference of corresponding relationships; otherwise, first updates the reference of corresponding relationships and then identifies the controlled unit according to the updated reference of corresponding relationships.

The above configuring the reference of corresponding relationships between the logical identifiers and the global identifiers of the controlled units can be realized in the following manner. The MCU allocates the logical identifiers for the controlled units according to the numbers and types of the controlled units at an initial start of a network system containing the MCU and the controlled units, builds communication links between the MCU and the controlled units according to the logical identifiers allocated for the controlled units, scans to acquire the global identifiers of the controlled units through the built communication links, and then builds and stores the reference of corresponding relationships between the logical identifiers and the global identifiers of the controlled units according to the logical identifiers allocated for the controlled units and the global identifiers of the controlled units acquired by scanning.

In the above process for the MCU to allocate the logical identifiers for the controlled units, because the numbers and types of the communication units in a networking are limited, a string representing the logical identifier of a controlled unit generally contains only 3 to 5 numbers or letters. Further, in the same networking, the logical identifier allocated for a controlled unit by the MCU is generally fixed.

In the above storing the reference of corresponding relationships between the logical identifiers and the global identifiers of the controlled units, the MCU generally stores the reference of corresponding relationships between the logical identifiers and the global identifiers of the controlled units into a non-volatile memory of its own.

After building the reference of corresponding relationships and before storing the built reference of corresponding relationships into the non-volatile memory of its own, the MCU further stores the built reference of corresponding relationships into a memory of its own. During a cutover access, i.e., at a formal start of the MCU, the MCU requests a operator to acknowledge whether the reference of corresponding relationships is correct, and if correct, the MCU stores the reference of corresponding relationships into the non-volatile memory of its own; otherwise, updates the reference of corresponding relationships according to an instruction of the operator and then stores the updated reference of corresponding relationships into the non-volatile memory of its own.

In the above Step 301, the updating the reference of corresponding relationships is to update the configured reference of corresponding relationships into a corresponding relation between the logical identifier and the global identifier of the current controlled unit. In addition, after determining the built corresponding relation and the reference of corresponding relationships are inconsistent, the MCU may further issue an alarm indicating that the controlled unit is changed. Therefore, the subscriber is able to timely deal with the abnormal circumstances according to the alarm so as to prevent further expansion of an accident.

In order to more explicitly illustrate the method for an MCU to identify controlled units of the present invention, the technical scheme provided by the present invention is described in detail below in an embodiment with the accompanying drawings.

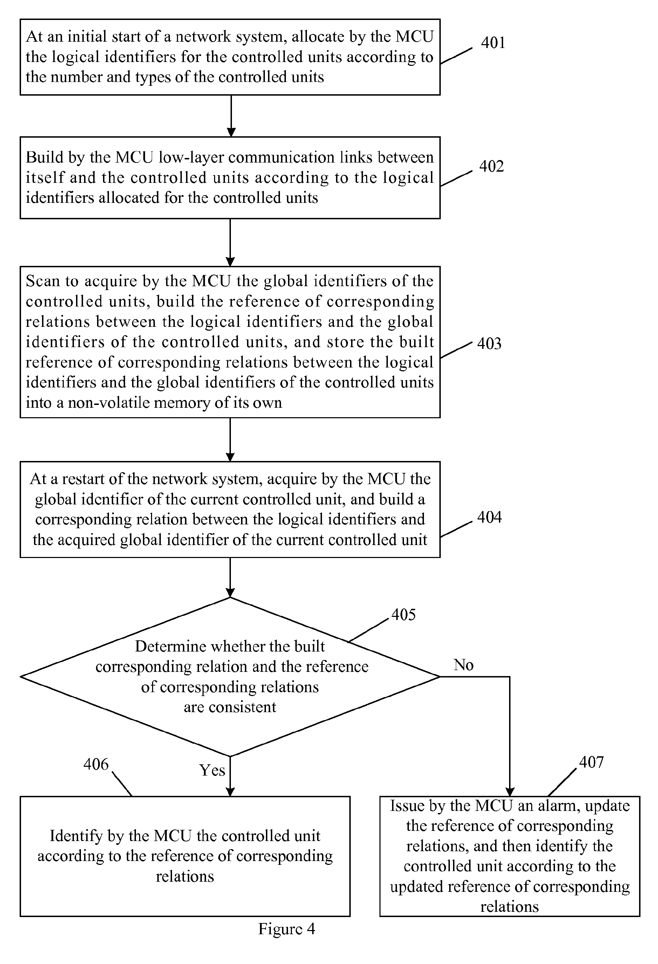

Figure 4 is a flow chart illustrating a method for an MCU to identify controlled units according to an embodiment of the present invention. Referring to Figure 3B and Figure 4, by adopting the system provided in an embodiment of the present invention, the method for an MCU to identify controlled units includes the following steps.

Step 401: The MCU allocates the logical identifiers for the controlled units according to the number and types of the controlled units at an initial start of a network system containing the MCU and the controlled units.

In this embodiment, the MCU may adopt a topology (HOP) level of controlled units to serve as the logical identifier of the controlled unit.

Step 402: The MCU builds low-layer communication links between itself and the controlled units according to the logical identifiers allocated for the controlled units.

Here, the low-layer communication links may be adapted to carry upper-layer messages and employed between the MCU and the controlled units.

Step 403: the MCU scans to acquire global identifiers of the controlled units through the built low-layer communication links, builds a reference of corresponding relationships between the logical identifiers and the global identifiers of the controlled units, and stores the built reference of corresponding relationships between the logical identifiers and the global identifiers of the controlled units into a non-volatile memory of its own.

Here, the non-volatile memory generally refers to a hard disk, flash memory, or compact flash (CF) card in which the stored information will not be lost during a power-off.

Step 404: At a restart of the network system containing the MCU and the controlled units, the MCU scans to acquire the global identifier of the current controlled unit through the built low-layer communication links, and builds a corresponding relation between the logical identifier and the acquired global identifier of the current controlled unit through the global identifier of the current controlled unit acquired by scanning and the logical identifier allocated for the current controlled unit at the initial start.

Step 405: The MCU determines whether the currently built corresponding relation and the configured reference of corresponding relationships between the logical identifiers and the global identifiers of the controlled units are consistent, and if consistent, proceeds to Step 406; otherwise, proceeds to Step 407.

Step 406: After determining the controlled units are unchanged, the MCU identifies the controlled unit according to the reference of corresponding relationships, and then this process ends.

Step 407: After determining the controlled unit is changed, the MCU issues an alarm indicating that the controlled unit is changed, updates the configured reference of corresponding relationships into the built corresponding relation between the logical identifier and the global identifier of the current controlled unit, and then identifies the controlled unit according to the updated reference of corresponding relationships.

In this step, the alarm information issued by the MCU may include: the information about the changes of the controlled unit and the information about the corresponding relation between the logical identifier and the global identifier of the current controlled unit built by scanning. Thus, the operator may acknowledge whether the controlled unit is changed or not according to the alarm information and input an acknowledgement instruction to the MCU after the acknowledgement. After receiving the acknowledgement instruction, the MCU continues updating the configured reference of corresponding relationships into the corresponding relation between the logical identifier and the global identifier of the current controlled unit and further performing the subsequent processes.

In Step 403 of this embodiment of the present invention, after building the reference of corresponding relationships between the logical identifiers and the global identifiers of the controlled units, the MCU directly stores the reference of corresponding relationships between the logical identifiers and the global identifiers of the controlled units into the non-volatile memory of its own. In actual practice, after building the reference of corresponding relationships between the logical identifiers and the global identifiers of the controlled units, the MCU may further store the built reference of corresponding relationships between the logical identifiers and the global identifiers of the controlled units into a memory of its own. During a cutover access, the MCU sends the request information for acknowledging whether the reference of corresponding relationships between the logical identifiers and the global identifiers of the controlled units is correct. If correct, the MCU continues storing the reference of corresponding relationships into the non-volatile memory of its own; otherwise, updates the reference of corresponding relationships and then stores the updated reference of corresponding relationships into the non-volatile memory of its own. Such technical scheme is consistent with that described in the embodiment of the present invention in ideas and should fall within the scope of the present invention.

In Step 407 of this embodiment of the present invention, after issuing the alarm indicating that the controlled unit is changed, the MCU directly updates the configured reference of corresponding relationships into the corresponding relation between the logical identifier and the global identifier of the current controlled unit. In actual practice, after issuing the alarm indicating that the controlled unit is changed, the MCU may further prompt the subscriber to acknowledge the built corresponding relation between the logical identifiers and the global identifiers of the controlled units. After receiving the acknowledgement information, the MCU updates the configured reference of corresponding relationships into the built corresponding relation between the logical identifier and the global identifier of the current controlled unit. Such technical scheme is consistent with that described in the embodiment of the present invention in ideas and should fall within the scope of the present invention.

In addition, according to the technical schemes provided in the present invention, the configured reference of corresponding relationships includes corresponding relationships between the logical identifiers and the global identifiers of the controlled units. In actual practice, the configured reference of corresponding relationships is not limited to the corresponding relationships between the logical identifiers and the global identifiers of the controlled units, and may include the other information automatically scanned and acquired by the MCU, for example, the topology map information of the controlled units. Meanwhile, the subscriber may query and change the reference of corresponding relationships or clear the information contained in the reference of corresponding relationships. For example, after changing a controlled unit 1 into a controlled unit 2, the subscriber may query the reference of corresponding relationships initiatively and then input a change instruction into the MCU. Thus, the MCU updates the reference of corresponding relationships according to the change information carried in the change instruction, for example, the logical identifier and the global identifier of the latest controlled unit 2. In other words, the corresponding relation directing to the controlled unit 1 in the reference of corresponding relationships is replaced by the corresponding relation between the logical identifier and the global identifier of the controlled unit 2. Such technical scheme is consistent with that described in the embodiment of the present invention in ideas and should fall within the scope of the present invention.

Though illustration and description of the present disclosure have been given with reference to preferred embodiments thereof, it should be appreciated by persons of ordinary skill in the art that various changes in forms and details can be made without deviation from the spirit and scope of this disclosure, which are defined by the appended claims.

## Claims

1. A method for a main control unit (MCU) to identify controlled units, comprising configuring a reference of corresponding relationships between logical identifiers and global identifiers of the controlled units, the method further comprising:
scanning , by the MCU, to acquire the global identifiers of the controlled units according to the logical identifiers of the controlled units, building a corresponding relation between the logical identifier and the acquired global identifier of the current controlled unit, and determining whether the built corresponding relationship is consistent with the reference of corresponding relationships, if consistent, identifying the current controlled unit according to the current reference of corresponding relationships, otherwise, updating the reference of corresponding relationships and identifying the current controlled unit according to the updated reference of corresponding relationships.

2. The method according to claim 1, wherein the configuring the reference of corresponding relationships between the logical identifiers and the global identifiers of the controlled units comprises:
building, by the MCU, communication links between the MCU and the controlled units according to the logical identifiers allocated for the controlled units;
scanning, by the MCU, to acquire the global identifiers of the controlled units through the communication links built between the MCU and the controlled units; and
building and storing, by the MCU, the reference of corresponding relationships between the logical identifiers and the global identifiers of the controlled units.

3. The method according to claim 2, wherein the logical identifiers allocated for the controlled units are logical identifiers allocated for the controlled units by the MCU according to the number and types of the controlled units at an initial start of a network system containing the MCU and the controlled units.

4. The method according to claim 2, wherein the MCU storing the reference of corresponding relationships between the logical identifiers and the global identifiers of the controlled units comprises:
storing, by the MCU, the built reference of corresponding relationships between the logical identifiers and the global identifiers of the controlled units into a non-volatile memory of the MCU.

5. The method according to claim 4, wherein after building, by the MCU, the reference of corresponding relationships between the logical identifiers and the global identifiers of the controlled units and before storing the reference of corresponding relationships into the non-volatile memory of the MCU, the method further comprises:
storing, by the MCU, the built reference of corresponding relationships into a memory of the MCU, and requesting, by the MCU, to acknowledge whether the reference of corresponding relationships is correct in response to a cutover access; if correct, continuing storing the reference of corresponding relationships into the non-volatile memory of the MCU, otherwise updating the reference of corresponding relationships and storing the updated reference of corresponding relationships into the non-volatile memory of the MCU.

6. The method according to claim 1, wherein the updating the reference of corresponding relationships comprises:
updating the reference of corresponding relationships with the built corresponding relation.

7. The method according to claim 1, wherein after determining the built corresponding relation and the reference of corresponding relationships are inconsistent and before updating the reference of corresponding relationships, the method further comprises: issuing, by the MCU, an alarm indicating that the current controlled unit is changed and determining whether an update confirm instruction input by an operator is received; and if received, continuing updating the reference of corresponding relationships.

8. The method according to claim 1, wherein the method further comprises: receiving, by the MCU, a change instruction input by a subscriber and updating the reference of corresponding relationships according to change information carried in the change instruction.

9. A system for an MCU to identify controlled units, comprising an MCU and controlled units, wherein:
the MCU is capable of storing a reference of corresponding relationships between logical identifiers and global identifiers of the current controlled units, scanning to acquire the global identifiers of the controlled units according to the logical identifiers of the controlled units, building a corresponding relation between the logical identifier and the acquired global identifier of the current controlled unit, and determining whether the built corresponding relation and the reference of corresponding relationships are consistent; if consistent, identifying the current controlled unit according to the current reference of corresponding relationships, otherwise updating the reference of corresponding relationships and identifies the current controlled unit according to the updated reference of corresponding relationships.

10. The system according to claim 9, wherein the MCU is capable of building communication links between itself and the controlled units according to the logical identifiers allocated for the controlled units at an initial start, scanning to acquire the global identifiers of the controlled units through the communication links built between itself and the controlled units, building and storing the reference of corresponding relationships between the logical identifiers and the global identifiers of the controlled units.
